# EUROPEAN PATENT SPECIFICATION

(11) **EP 0 638 156 B1**
(45) Date of publication and mention of the grant of the patent: **04.06.1997**
(21) Application number: 93909113.8
(22) Date of filing: 07.04.1993
(51) Int. Cl.: F16L 11/10, F16L 35/00

(54) **ANTICOLLAPSE MEANS FOR FLEXIBLE HOSES AND METHOD OF ITS MANUFACTURE**
MITTEL ZUM VERHINDERN DES EINFALLENS VON SCHLÄUCHEN UND VERFAHREN ZU SEINER HERSTELLUNG
MOYENS SERVANT A EMPECHER L'APLATISSEMENT DE TUYAUX SOUPLES ET PROCEDE POUR LEUR FABRICATION

(30) Priority: 09.04.1992 SE 9201135
(43) Date of publication of application: 15.02.1995
(73) Proprietor: Larsson, Nils, S-421 68 Västra Frölunda (SE)
(72) Inventor: Larsson, Nils, S-421 68 Västra Frölunda (SE)
(74) Representative: Roth, Ernst Adolf Michael
(86) International application number: SE9300299
(87) International publication number: WO9321467

(56) References cited:
- DE-A- 2 020 593
- DE-A- 2 204 240
- GB-A- 941 472
- US-A- 1 249 038
- US-A- 3 610 289

## Description

The present invention refers to a device for flexible hoses of the. kind, which internally and/or externally are reinforced by means of a coil shaped spring or the like for preventing the hose from collapse when bending.

### Background of the invention

Problems arise when plastic hoses are exposed to heat, in particular shower hoses. When hot water passes through the hose, it expands (approximately: 20%) and loses its stability, which causes the hose to fold at bending, ie. it collapses so that the water is choked or completely blocked.

Through US-3889717 and SE-57563 is known to provide a flexible hose with a coil, so that the hose does not collapse, if for instance, vacuum is built up in the system or the hose is exposed to twists and bends. The coil spring can even be introduced externally on the hose. According to these patents the coil spring is loosely provided, and if the hose is warmed up it expands, which results the coil spring to lose its hold and be displaced and not achieve the protection, which the spring is intended for at the exposed locations.

In most cases abrupt flexures occur only at one end portion of the hose, where the hose is attached, for instance to a water tap, and therefor the hose only needs to be reinforced at this position.

US-A-3 610 289 discloses an air line for use with articulated vehicles, the air line comprising a hose reinforced by a coil spring, the latter being held at the ends of the hose by an internal socket shaped nipple.

### Objects and essential features of the invention

The reinforced flexible hose is defined by the features of claim 1 and the method of its manufacture by the steps of claim 6.

The object of this invention is by simple means and with ease be able to mount the device, which protects flexible hoses from collapsing when these are flexured. These tasks have been solved by means of a spring, which is attached to an inner socket-shaped nipple only at one end, which are arranged through force fitting to be connected to one end-portion of the hose, and that the spring is provided freely movable in the hose and that the spring before insertion in the hose, is screwed firmly on the nipple, compressed, and inserted in the hose in a compressed condition, after which the spring is decompressed.

### Specification of the drawings

The invention will be described in closer detail with reference to accompanying drawings, which show some embodiments of the invention.
Fig. 1 discloses an end portion of a partly sectioned hose, equipped with an anticollapse means according to the invention.
Fig. 2 discloses the anticollapse means in a front view.
Figs. 3 and 4 show a second embodiment, with double anticollapse means.

### Description of the embodiments

The anticollapse means according to the invention consists of a socket-shaped nipple 12 insertable in a hose 10 and a coil spring 11 attached to one end of it. The spring 11 is attached to the nipple 12 by screwing it onto a screw-threaded section 13 provided on the nipple, the thread pitch of which corresponds to the pitch of the coil spring 11. By letting the end of the spring be freely movable, the hose's 10 mobility and flexibility is not impeded. The length of the spring 11 is arbitrary, but since the hose is bent and folded mostly at its end portions, in particular the end part that is connected to the tap, the springs with a longitudinal axis of 10 - 20 cm are used protecting the end portions from collapsing.

Before the nipple 12 and on it firmly mounted spring 11 is attached to the hose 10 through force fitting, the spring is compressed and inserted in the hose in compressed condition, after which the spring is decompressed.

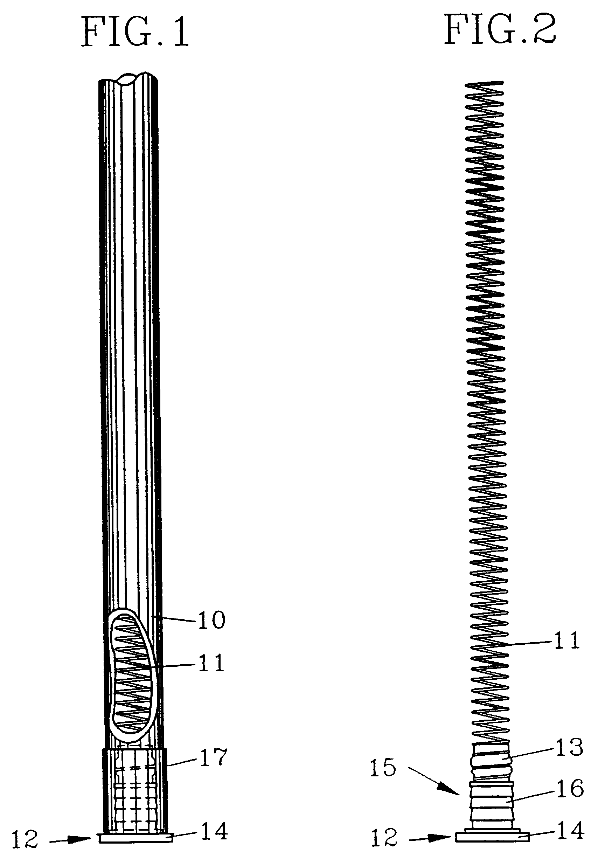

The nipple 12 and the spring 11 firmly screwed on it, is fixed in the hose 10 by means of barbs 16, which are formed on the part 15 of the nipple attachable to the hose 10 and an antiexpansion socket 17, which is inserted on the hose 10 according to fig. 1. An end plate 14, the radius of which is preferably larger than the external radius of the expansion socket 17, is arranged radially on the end of the nipple 12 situated, which is off the spring-hold end, to prevent the nipple from dislocation axially.

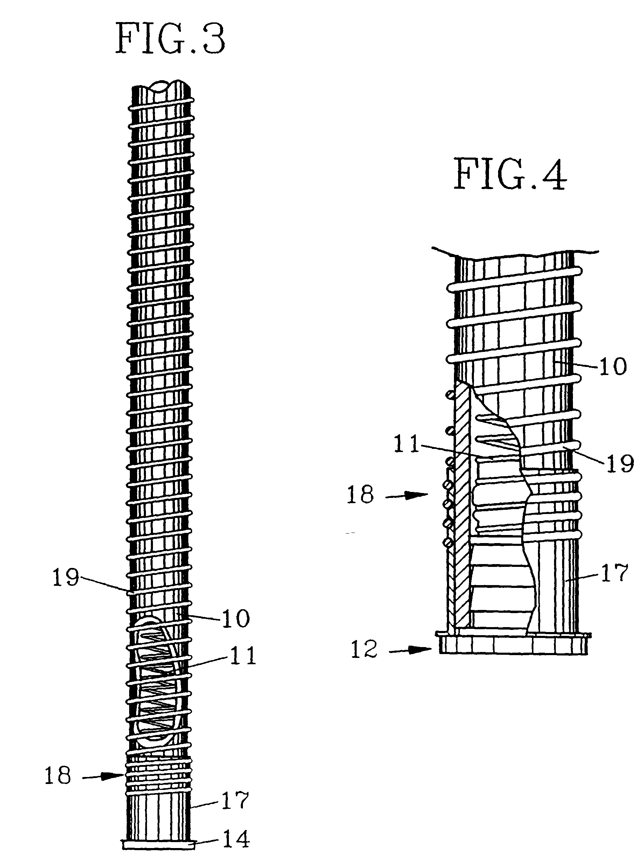

When the hose 10 is exposed to an extreme load, the hose can be additionally reinforced by using two anticollapse means according to fig. 4, at which a nipple 12 provided with a spring is force fitted into the hose 10 and a socket arranged with a second spring 19 is mounted externally on the hose.

In this case the spring 19 is screwed to a threaded spring-hold 18 on the antiexpansion socket 17. The spring-hold 18 of the socket forms a threaded-portion, the thread pitches of which correspond to the coil shaped pitch of the spring.

The invention is not limited to the embodiments described and other embodiments can occur, eg in one end-section of the hose, short spring-parts can be moulded at certain distances from each other when manufacturing, whereby the hose is cut at the spring-holds in desired lengths.

### Referencal numerals.

- 10: Hose
- 11: Spring
- 12: Nipple
- 13: Spring-hold
- 14: End plate
- 15: Attachable part
- 16: Barb
- 17: Socket
- 18: Spring hold of the socket
- 19: External spring

## Claims

1. Reinforcing flexible hose for conducting fluids having varying temperature which effects the structure of the hose, which is reinforced by means of a coil spring (11) for preventing the hose (10) from collapsing at flexure, whereby
said spring (11) at one end is screwed to an internal socket-shaped nipple (12), which holds said screwed end of said spring (11) intermediate to said nipple and the hose (10) and the second end of said spring (11, 19) is axially movable, said nipple (12) being arranged to be connected to one end portion of the hose through force fitting.

2. Reinforced flexible hose according to claim 1,
**characterized in,**
that the nipple (12) at its one end, situated off the spring-hold is provided with a radially arranged end plate (14) intended to be placed outside the said end portion of the hose.

3. Reinforced flexible hose according to claim 1,
**characterized in,**
that to the hose attachable part (15) of the nipple (12) is arranged with barbs (16).

4. Reinforced flexible hose according to claim 1,
**characterized in,**
that on the outside of the end portion of the hose, where it is provided with the nipple, a hose antiexpansion casing socket (17) is arranged.

5. Reinforced flexible hose according to claim 1,
**characterized in,**
that a spring-hold (18) of the casing socket (17) is shaped with a threaded portion, the thread pitch of which corresponds to the pitch of the coil-shaped spring mounted on the casing socket.

6. Method of manufacturing a reinforced flexible hose according to claim 1,
**characterized in,**
that the spring (11) before insertion in the hose (10) is screwed firmly on the nipple, compressed and inserted in the hose in compressed condition, after which the compression is revoked.

## Patentansprüche

1. Verstärkung eines flexiblen Schlauches zur Leitung von Flüssigkeiten mit verschiedenen, die Struktur des Schlauches beeinflussenden Temperaturen, welcher durch eine Schraubenfeder (11) zur Verhinderung des Einknickens des Schlauches (10) bei Biegung verstärkt ist, wobei
die Feder (11) an einem Ende mit einem inneren sockelförmigen Nippel (12) verschraubt wird, welcher das aufgeschraubte Ende der Feder (11) zwischen dem Nippel und dem Schlauch (10) hält und das zweite Ende der Feder (11, 19) axial beweglich ist, wobei der Nippel (12) so angeordnet ist, daß er durch Aufpressen mit dem einen Endteil des Schlauches verbindbar ist.

2. Verstärkter flexibler Schlauch nach Anspruch 1,
dadurch gekennzeichnet, daß
der Nippel (12) an dem einen, von der Federhalterung entfernten Ende mit einer radial angeordneten Endplatte (14), die außen vor das Endteil des Schlauches angeordnet werden soll, versehen ist.

3. Verstärkter flexibler Schlauch nach Anspruch 1,
dadurch gekennzeichnet, daß
der auf den Schlauch aufsteckbare Teil (15) des Nippels (12) Rutschbremsen (16) aufweist.

4. Verstärkter flexibler Schlauch nach Anspruch 1,
dadurch gekennzeichnet, daß
an der Außenseite des Endteils des Schlauches, an welchem der Nippel vorgesehen ist, ein Gehäusesockel zur Verhinderung der Ausdehnung des Schlauches angeordnet ist.

5. Verstärkter flexibler Schlauch nach Anspruch 1,
dadurch gekennzeichnet, daß
eine Federhalterung (18) des Gehäusesockels (17) mit einem Gewindeteil ausgebildet ist, dessen Gewindesteigung der Steigung der schraubenförmigen, auf dem Gehäusesockel montierten Feder entspricht.

6. Verfahren zur Herstellung eines verstärkten flexiblen Schlauches nach Anspruch 1,
dadurch gekennzeichnet, daß
die Feder (11) vor Einführung in den Schlauch (10) fest auf den Nippel geschraubt, zusammengedrückt und im zusammengedrückten Zustand in den Schlauch eingeführt wird, wonach das Zusammendrücken rückgängig gemacht wird.

## Revendications

1. Tuyau souple renforcé servant à véhiculer des fluides ayant une température variable, qui affecte la structure du tuyau, qui est renforcé au moyen d'un ressort hélicoïdal (11) servant à empêcher que le tuyau (10) ne s'aplatisse et ne fléchisse, dans lequel ledit ressort (11) est vissé, à une extrémité, sur un raccord fileté interne (12) en forme de douille, qui retient ladite extrémité vissée dudit ressort (11) dans une position intermédiaire entre ledit raccord fileté et le tuyau (10), et la seconde extrémité dudit ressort (11,19) est déplaçable axialement, ledit raccord fileté (12) étant agencé de manière à être raccordé par montage à force à une partie d'extrémité du tuyau.

2. Tuyau souple renforcé selon la revendication 1, caractérisé en ce que le raccord fileté (12) comporte, à son extrémité éloignée de la partie de maintien du ressort, une plaque d'extrémité (14) disposée radialement et destinée à être placée à l'extérieur de ladite partie d'extrémité du tuyau.

3. Tuyau souple renforcé selon la revendication 1, caractérisé en ce que des barbes (16) sont prévues sur la partie (15) du raccord fileté (12), qui peut être fixé au tuyau.

4. Tuyau souple renforcé selon la revendication 1, caractérisé en ce que sur l'extérieur de la partie d'extrémité du tuyau, celle munie du raccord, une gaine (17) antiexpansion de tuyau est montée.

5. Tuyau souple renforcé selon la revendication 1, caractérisé en ce qu'une partie de maintien (18) du ressort de la gaine est mise en forme avec une partie taraudée, dont le pas de vis correspond au pas du ressort monté sur la gaine.

6. Méthode de fabrication d'un tuyau souple renforcé selon la revendication 1, caractérisé en ce que le ressort (11) avant insertion dans le tuyau (10) est vissé fermement sur le raccord, compressé et inséré dans le tuyau en condition compressée, après quoi la compression est annulée.
